# EUROPÄISCHE PATENTANMELDUNG

(11) **EP 1 493 656 A1**
(43) Veröffentlichungstag der Anmeldung: **05.01.2005**
(21) Anmeldenummer: 03015061.9
(22) Anmeldetag: 03.07.2003
(51) Int. Cl.: B63G 8/00

(54) **Unterseeboot**

(71) Anmelder: Gabler Maschinenbau GmbH, D-23568 Lübeck (DE)
(72) Erfinder: Krüger, Lorenz, 23552 Lübeck (DE); Scharf, Wolfgang, 23617 Horsdorf (DE)
(74) Vertreter: Vollmann, Heiko, Dipl.-Ing.

(57) **Zusammenfassung**

Das Unterseeboot weist eine Einrichtung zur Probennahme von Wasser und/oder Luft auf, die vorzugsweise an einem Ausfahrgerät angeordnet ist, so dass unbemerkt Wasser- und/oder Luftproben genommen werden können, um Umweltsünder zu entlarven. Darüber hinaus können auch Wasserproben in Tauchtiefe genommen werden.

## Beschreibung

Die Erfindung betrifft ein Unterseeboot.

Es zählt zum Stand der Technik, Fährschiffe, die regelmäßig dieselben Routen fahren, mit einem Meßsystem auszustatten, welches in vorgegebenen zeitlichen Abständen oder an vorgegebenen örtlichen Positionen Daten des umgebenden Wassers, insbesondere ozeanografische Daten erfasst und diese via GSM-Telefon an eine an Land befindliche Zentrale übermitteln. Dieses System ist unter dem Namen FerryBox bekannt und wird beispielsweise auf Ostseefähren eingesetzt. Dabei wird umgebendes Wasser zunächst angesaugt, und dann diversen Analyse-stationen zugeführt, um den PH-Wert, den Sauerstoffgehalt, und andere wasserspezifische Daten zu ermitteln. Das so analysierte Wasser wird anschließend wieder ins Meer zurückgepumpt.

Diese Einrichtung hat sich zwar grundsätzlich bewährt, da sie mit geringem personellen Aufwand eine Vielzahl von ozeanografischen Daten regelmäßig erfassen kann, stößt jedoch insbesondere dort an Grenzen, wo es beispielsweise darum geht, solche Daten aus unterschiedlichen Wassertiefen zu sammeln oder beispielsweise Umweltsünder auf See aufzuspüren. Diese stoppen nämlich üblicherweise die Verklappung von umweltschädlichen Stoffen, sobald sie ein Schiff oder Flugobjekt in der Ferne entdecken.

Der vorliegenden Erfindung liegt die Aufgabe zugrunde, die vorgenannten Nachteile zu überwinden.

Erfindungsgemäß ist hierzu vorgesehen, ein Unterseeboot mit einer Einrichtung zur Probennahme von Wasser und/oder Luft auszurüsten. Dabei soll die Einrichtung vorzugsweise nicht nur zur Probennahme von Wasser sondern auch von Luft vorgesehen sein, um auch eine Schadstoffüberwachung der Luft über dem Wasser zu ermöglichen.

Ein wesentlicher Vorteil der erfindungsgemäßen Lösung liegt darin, dass zum einen Wasser aus unterschiedlichen Tiefen entsprechend der jeweiligen Tauchtiefe des Unterseeboots als Probe genommen und sofort oder auch später hinsichtlich seiner Inhaltsstoffe und/oder Eigenschaften analysiert werden kann, und soweit es insbesondere das Aufspüren von Umweltsündern angeht, dass eine versteckte Probennahme möglich ist, also ohne dass durch Sichtkontakt oder vorheriger Ortung der Umweltsünder gewarnt wird.

Bevorzugt ist die Einrichtung zur Probennahme nicht unmittelbar am Unterseeboot, sondern an einem Ausfahrgerät angeordnet. Dann kann Oberflächenwasser als Probe entnommen werden, ohne das das U-Boot auftauchen muss. Gleichzeitig kann mittels des Ausfahrgeräts - beispielsweise durch Anordnung einer GPS-Antenne an dessen freien Ende mit nachgeschaltetem GPS-Empfänger die Positionsbestimmung - zuverlässig erfolgen.

Die Anordnung der Einrichtung zur Probennahme am Ausfahrgerät ermöglicht darüber hinaus auch die Probennahme von Luftproben, ohne dass das Unterseeboot auftauchen muss. Es können also auf sehr diskrete Weise sowohl Luft- als auch Wasserproben genommen werden.

Zwar kann unmittelbar an Bord eine Analyse der genommenen Proben erfolgen, bevorzugt ist jedoch auch ein Magazin zur Aufbewahrung und Lagerung der Proben vorgesehen, um diese dann später an Land im Einzelnen analysieren zu können. Eine Vielzahl von Analysen können aufgrund der hierfür erforderlichen Analysegeräte nicht oder nur schlecht auf einem Boot, insbesondere einem Unterseeboot durchgeführt werden, und zwar sowohl aus räumlichen als auch aus wirtschaftlichen sowie technischen Gründen. Das Magazin ermöglicht die Aufbewahrung und Lagerung der genommenen Proben, so dass diese später an Land im Einzelnen untersucht und ausgewertet werden können.

Vorteilhaft ist jedoch an Bord auch eine Analyseeinrichtung, mit der eine sofortige Untersuchung der genommenen Proben möglich ist. Dies ist insbesondere zum Aufspüren von Umweltsündern zweckmäßig, aber auch für technisch vergleichsweise wenig aufwändig zu ermittelnde Daten wie beispielsweise die Erfassung von Temperatur, Salinität, Phosphat, Phosphor, Nitrit, Nitrat, Ammonium, Silikat, Nitrogen, Chlorophyll-a und Phytoplankton. Darüber hinaus können auch Hauptalgengruppen in der Analyseeinrichtung bestimmt werden, die Trübung, der gelöste Sauerstoff, der PH-Wert, die Chlorophyll-Fluoreszenz und gegebenenfalls weitere charakteristische Eigenschaften.

Zusätzlich sollten anorganische und organische Verbindungen (vor allen Dingen Kohlenwasserstoffe), die künstlich hergestellt sind oder natürlich vorkommen, bestimmt werden können. Da die Probennahme in jeder Tauchtiefe möglich ist, wird damit erstmals ermöglicht, diese vorgenannten Daten auch aus unterschiedlichen Wassertiefen,zu sammeln. Das U-Boot kann darüber hinaus aufgrund seiner Eigenschaften zusätzlich ein Schallgeschwindigkeitsprofil über die Tiefe erstellen und entsprechende Wichtemessungen vornehmen. Bei Ausstattungen mit einem Dopplersonar (acoustic doppler current profiler, ADCP) ist es darüber hinaus in der Lage, unterseeische Strömungen zu erfassen und zu dokumentieren.

Sowohl für meeresgeologische als auch für militärische Untersuchungen ist es zweckmäßig, das Unterseeboot mit einem Multibeam-Sonar-System oder getrennt mit einem Sedimentsonar und einem Fächersonar ausrüsten, um den Meeresboden zu untersuchen und zu vermessen.

Grundsätzlich sind sowohl die Analyseeinrichtung als auch das Magazin der Probenentnahmeeinrichtung nachgeschaltet. Zwar kann das Magazin der Analyseeinrichtung nachgeschaltet werden, vorteilhaft ist es jedoch parallel zu dieser angeordnet, so dass ein Teil der entnommenen Probe ins Magazin zur späteren Analyse, wo ein anderer Teil direkt zur Analyse an Bord in der Analyseeinrichtung gelangt.

Für die Anordnung von Magazin und Analyseeinrichtung sind gemäß der Erfindung zwei Varianten vorgesehen. Bei der ersten Variante werden diese außerhalb des Druckkörpers, vorzugsweise im Bereich des Oberdecks oder des Turmes angeordnet. Dies hat den Vorteil, dass der eigentliche Druckkörper durch die Probenentnahmeeinrichtung, durch die Analyseeinrichtung und durch das Magazin in keiner Weise tangiert werden. Dies ist insbesondere dann von Vorteil, wenn es um die Probennahme von gefährlichen Stoffen wie beispielsweise radioaktiv verseuchten Wasser, bakteriologisch verseuchten Wasser oder Chemikalien geht, wie sie beispielsweise bei einer Havarie austreten können. Alternativ oder zusätzlich können Analyseeinrichtung und Magazin auch innerhalb des Druckkörpers vorgesehen sein.

In jedem Fall ist sicherzustellen, dass es sich bei der im Magazin gelagerten Probe und bei der in der Analyseeinrichtung durchgeführten Analyse auch tatsächlich um das gerade entnommene Probenmedium handelt und nicht um Reste der Vorprobe. Um dies sicherzustellen wird zweckmäßigerweise eine Spüleinrichtung vorgesehen, welche den Leitungsweg von der Entnahmestelle bis zum Magazin und bis zur Analyseeinrichtung mit dem Probenfluid vorspült. Wenn die Analyseeinrichtung und das Magazin außerhalb des Druckkörpers angeordnet sind, kann zunächst ein Vorspülen erfolgen, solange bis der Leitungsweg von der Probennahmestelle am Ausfahrgerät bis zur Analyseeinrichtung bzw. bis zum Magazin ein- oder vorzugsweise mehrfach durchspült worden ist. Das dann überschüssige Fluid kann in einfacher Weise wieder in die Umgebung geleitet werden, zweckmäßigerweise so, dass es nicht wieder sofort zur Entnahmestelle gelangt.

Gemäß der Erfindung können auch mehrere Magazine und Analysevorrichtungen innerhalb und außerhalb des Druckkörpers vorgesehen sein, so dass die entnommene Probe wahlweise in das Innere des Druckkörpers geleitet oder außerhalb analysiert und gelagert werden kann.

Das Magazin stellt eine Vielzahl von hermetisch abschließbaren Speicherplätzen dar, in welche jeweils ein Teil einer entnommenen Probe einfüllbar ist, insbesondere um diese später an Land zu verbringen und dort in einem Labor zu untersuchen. Um eine eindeutige Zuordnung sowohl der im Magazin befindlichen Proben als auch der in Analyseeinrichtung ermittelten Daten zu erlangen sind zum einen Mittel zur Ortsund Zeitbestimmung vorgesehen, zum anderen ist eine Rechnereinheit mit Datenbankstruktur vorgesehen, welche die örtliche und zeitliche Zuordnung und Speicherung von Analysedaten und Probedaten vornimmt. Die Ortsbestimmung erfolgt zweckmäßigerweise mittels Global Positioning System (GPS), hierüber kann im Übrigen auch die Zeitbestimmung erfolgen. Wenn jedoch, zum Beispiel bei einer Tauchfahrt in großer Tauchtiefe ein GPS-Signal nicht zur Verfügung steht, kann die Orts- und Zeitbestimmung auch anhand der hierfür im Unterseeboot vorhandenen und üblichen Zeitmesser und Navigationsmittel erfolgen.

Um die Analysedaten möglichst zeitnah dorthin zu übermitteln, wo sie ausgewertet oder verwertet werden, ist gemäß einer Weiterbildung der Erfindung eine Einrichtung zur drahtlosen Übermittlung der Analysedaten sowie deren zeitlicher und räumlicher Zuordnung vorgesehen. Die drahtlose Übermittlung wird zweckmäßigerweise über Funk, sei es in Küstennähe über beispielsweise das GSM-Telefonnetz oder aber über andere vorzugsweise digitale Funkverbindungen durchgeführt. Die Übermittlung kann auch via Satellit erfolgen, so dass auch über große Entfemungen eine zuverlässige Datenübermittlung sichergestellt werden kann. Die Antenne ist dabei zweckmäßigerweise am Ausfahrgerät angeordnet, so dass zum Zwecke des Sendens der Daten das Unterseeboot getaucht bleiben kann und lediglich das Ausfahrgerät oder gegebenenfalls ein davon abkuppelbarer Teil an die Wasseroberfläche gelangt.

Bei Anordnung der Analyseeinrichtung und/oder des Magazins innerhalb des Druckkörpers hat dies insbesondere magazinseitig den Vorteil, dass das Magazin mit quasi drucklosen Wechselbehältern bestückt werden kann, die lediglich innerhalb des Magazins dicht gekapselt sein müssen, so dass diese Behälter gegebenenfalls gruppenweise getauscht werden können. Damit kann die gesamte Lagerung der Proben nicht nur innerhalb des Magazins, sondern auch an einem anderen geeigneten Ort stattfinden. Hierdurch wird die Kapazität des Magazins erheblich vergrößert und der Platzbedarf verringert. In diesem Fall ist es jedoch zweckmäßig, eine tauchdruckfeste Schleuse vorzusehen, über die auch in getauchten Zustand Proben in den Druckkörper verbracht werden können. Auch bei Verwendung einer solchen Schleuse ist durch geeignete verfahrenstechnische Maßnamen sicherzustellen, dass eine ausreichende Spülung erfolgt, bevor die Einleitung der Probe in das Magazin bzw. in die Analyseeinrichtung erfolgt.

Die erfindungsgemäße u-bootseitig angeordnete Einrichtung zur Probennahme, die Analyseeinrichtung, das Magazin sowie die diese verbindende fluidführenden Teile, Hilfsaggregate und dergleichen können bei einem Neubau eines Unterseeboots raumoptimiert angeordnet werden. Bei vorhandenen Unterseebooten, insbesondere auch bei militärischen Unterseebooten wird für diese Baugruppen regelmäßig kein Freiraum vorhanden sein. Gemäß einer Weiterbildung der Erfindung ist daher vorgesehen, dass mindestens das Ausfahrgerät mit der Einrichtung zur Probennahme, vorzugsweise auch das Magazin und die Analyseeinrichtung sowie die vorgenannten Nebenaggregate Teil einer Baueinheit sind, welche nach Durchtrennen des Unterseeboots quer zu seiner Längsachse in dieses eingliederbar ist. Die Trennung erfolgt dabei vorzugsweise im Bereich des Turmes, um auch das Ausfahrgerät an geeigneter Stelle anbringen zu können. Diese Baueinheit bildet quasi eine Scheibe, welche nach Durchtrennen des Unterseeboots quer zu seiner Längsachse und Auseinanderziehen eingegliedert wird, wonach eine Verschweißung diese Baueinheit mit den verbleibenden Teilen erfolgt und innerhalb des Unterseeboots die entsprechenden elektrischen und fluidführenden Leitungsverbindungen ergänzt werden. Hierdurch kann der nötige Freiraum für die vorgenannten Teile geschaffen werden, ohne dass eine Neukonstruktion des Bootes erforderlich ist.

Die Erfindung ist nachfolgend anhand eines in der Zeichnung dargestellten Ausführungsbeispiels näher erläutert. Es zeigen:
- Fig. 1: in stark vereinfachter, teilweise geschnittener Darstellung ein erfindungsgemäßes Unterseeboot in getauchtem Zustand,
- Fig. 2: in vergrößerter Darstellung den oberen Teil des Ausfahrgerätes des U-Boots gemäß Fig. 1,
- Fig. 3: in vergrößerter schematischer Darstellung die Analyseeinrichtung und das Magazin der Fig. 1 und

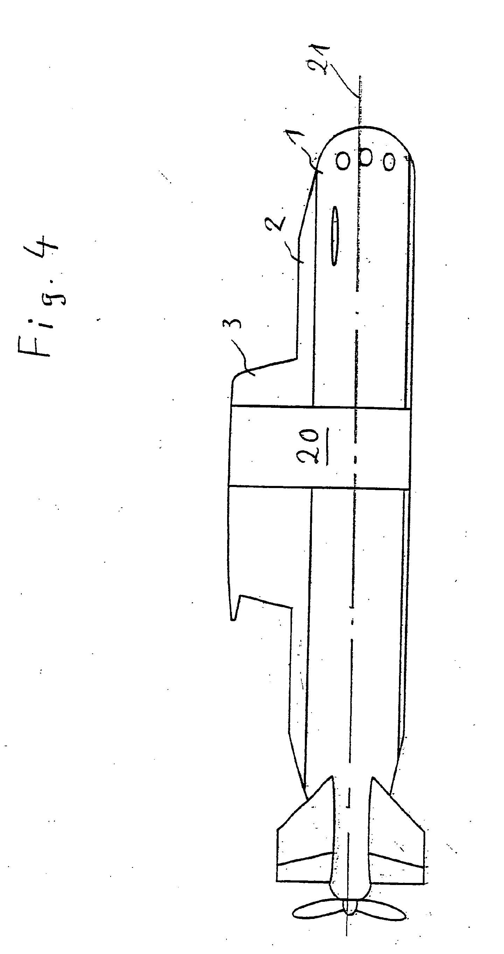

- Fig. 4: die erfindungsgemäße Baueinheit, die in ein vorhandenes Unterseeboot eingegliedert worden ist.

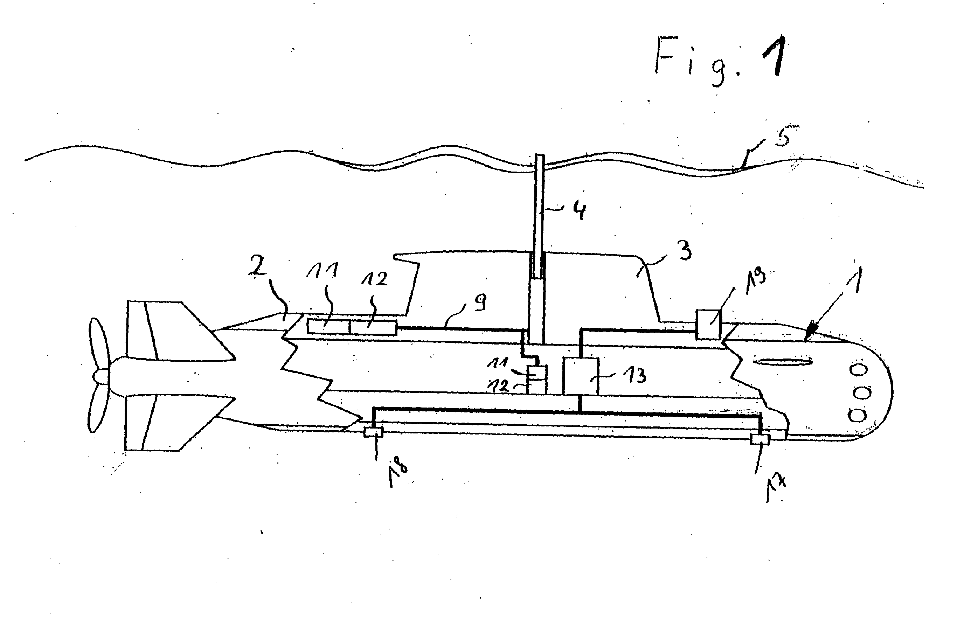

Bei dem anhand von Fig. 1 dargestellten Unterseeboot handelt es sich um ein solches, wie es typischerweise für militärische Zwecke eingesetzt wird. Es weist einen im Wesentlichen zylindrischen Druckkörper 1 auf, in dem alle wesentlichen Aggregate des Bootes sowie auch die Mannschaft druckdicht geschützt ist. An der Oberseite des Druckkörpers 1 schließt sich ein Oberdeck 2 an, das im mittleren Bereich des Bootes zu einem Turm 3 nach oben herausgebaut ist, in dem der Zugang zum Druckkörper 1 sowie die Ausfahrgeräte angeordnet sind.

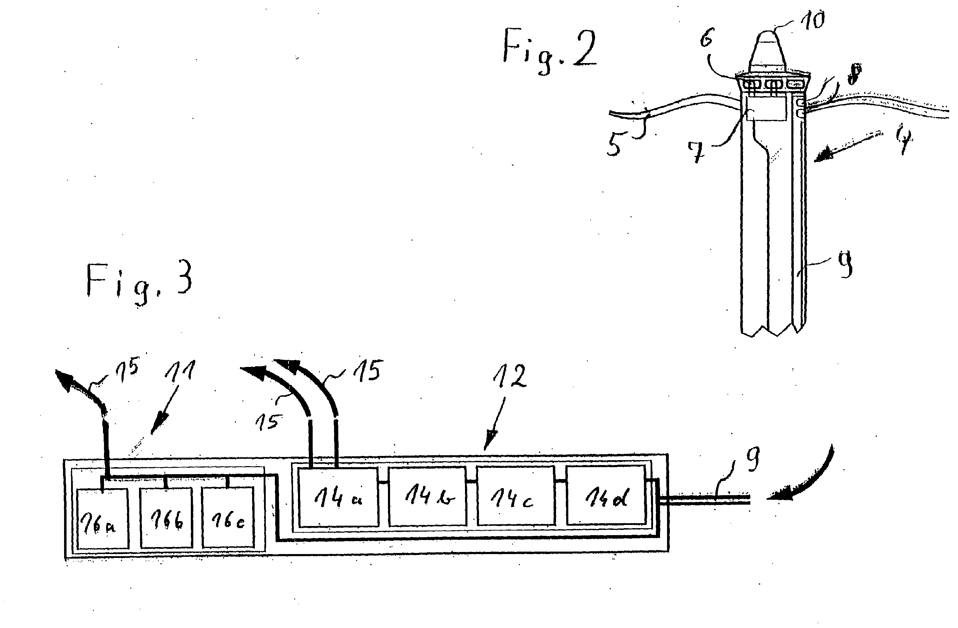

Ein Ausfahrgerät 4 ist beispielhaft in Fig. 1 dargestellt, und zwar in ausgefahrener Stellung. Die Wasseroberfläche ist mit 5 gekennzeichnet. Der Aufbau des Ausfahrgerätes 4 ist in Fig. 2 verdeutlicht. Es handelt sich hierbei um ein teleskopierbares, jedoch nicht in den Druckkörper 1 einfahrendes Ausfahrgerät 4, das an seinem oberen Ende Öffnungen 6 aufweist, über die je nach Stellung des Ausfahrgerätes die umgebende Luft oder das umgebende Wasser in eine erste Warn- und Analyseeinheit 7 am oberen Ende innerhalb des Ausfahrgerätes 4 gelangen. Hier sind typischerweise A-, B- und C-Sensoren angeordnet, sowie je nach Einsatz auch Sensoren zur Ermittlung von Schadstoffen in Luft/oder Wasser.

Weiterhin sind nahe dem oberen Ende des Ausfahrgerätes 4 Öffnungen 8 vorgesehen, die zur eigentlichen Probennahme dienen. Diese Öffnungen liegen je nach Ausfahrstellung über oder unter der Wasseroberfläche 5. Diese Öffnungen 8 münden in eine Leitung 9, die mittels eines nicht dargestellten Ventils absperrbar ist. Weiterhin ist der Leitung ein ebenfalls nicht dargestelltes Pumpenaggregat zugeordnet, welches für die Fluidförderung durch die Öffnungen 8, die Leitung 9 in die nachgeschalteten Einrichtungen, die in Fig. 3 im Einzelnen dargestellt sind, sorgt. Das obere Ende des Ausfahrgerätes 4 wird durch eine GPS-Antenne gebildet. Darüber hinaus ist dort noch eine übliche Funkantenne vorgesehen.

Die Öffnungen 8 in Verbindung mit der Leitung 9 sowie der zugeordneten Fördereinrichtung (Pumpenaggregat und Ventil) einschließlich der zugehörigen Steuerung bilden die eigentliche Einrichtung zur Probennahme, die wahlweise zur Aufnahme von Luft- und Wasserproben ausgelegt ist.

Dieser Einrichtung zur Probennahme ist über die Leitung 9 ein Magazin 11 sowie eine Analyseeinrichtung 12 nachgeordnet, die parallel von der Leitung 9 versorgt werden. Steuerungsmäßig verknüpft sind die vorgenannten Aggregate und Einrichtung durch eine zentrale Rechnereinheit 13, welche darüber hinaus die datenbankmäßige Zuordnung der entnommen Proben und Analysedaten übernimmt. Die gesamte Einrichtung zur Probennahme sowie das Magazin 11 und die Analyseeinrichtung 12, welche außerhalb des Druckkörpers 1 angeordnet sind, sind druckfest ausgebildet, so dass sie unabhängig von der Tauchtiefe des Bootes Proben nehmen, analysieren und lagern können. Wie sich aus der Einzelheit gemäß Fig. 3 ergibt, sind die Analyseeinrichtung 12 und das Magazin 11 über die Leitung 9 parallel versorgt.

Die Analyseeinrichtung 12 weist hier beispielhaft vier Analysestationen 14a bis d auf, die jeweils unterschiedliche Eigenschaften bzw. Inhaltsstoffe der entnommenen Proben analysieren, zum Beispiel den Salzgehalt, den Sauerstoffgehalt, den Algengehalt und den Nitratgehalt. Diese Analysestationen 14a bis 14d werden in der erforderlichen Anzahl und Art vorgesehen und in geeigneter Weise nacheinander oder parallel mit Probenfluid versorgt. Das analysierte Fluid wird dann über Spülleitungen 15 wieder ins Freie geleitet. Dabei sorgt die in der Rechnereinheit 13 implementierte Steuerung dafür, dass vor Analyse über die Leitung 9 und die Spülleitungen 15 genügend Fluid sowohl durch die Analyseeinrichtung 12 als auch durch die zuführenden Leitungen zum Magazin 11 geleitet wird, um sicherzustellen, dass nicht Restfluid der vorherigen Probennahme analysiert bzw. im Magazin 11 gespeichert wird.

Das Magazin 11 weist eine Vielzahl von Behältnissen 16 auf, von denen hier nur beispielhaft drei Behältnisse 16a, 16b und 16c dargestellt sind, in denen ein Teil der Probennahme eingeleitet und die danach jeweils hermetisch verschlossen werden. Das Magazin 11 ist zweckmäßigerweise so konzipiert, dass es (z. B. im Hafen) von außen zugänglich ist, so dass die Behältnisse 16 satzweise austauschbar sind.

Mittels der Rechnereinheit 13 erfolgt eine räumliche und zeitliche Zuordnung der jeweiligen Probennahme und der in der Analyseeinrichtung 12 ermittelten und in der Rechnereinheit 13 gespeicherten Analysedaten sowie zusätzlich die räumliche Zuordnung dieser Proben innerhalb des Magazins 11.

Alternativ und zusätzlich können innerhalb des Druckkörpers 1 ein Magazin 11 sowie eine Analyseeinrichtung 12 angeordnet sein. Diese sind durch eine nicht dargestellte Schleuse mit der Leitung 9 der Probennahmeeinrichtung im Ausfahrgerät 4 verbunden.

Die räumliche Zuordnung der Probennahme erfolgt, sofern die GPS-Antenne 10 über der Wasseroberfläche 5 befindlich ist und Satellitenkontakt hat über die damit empfangenen GPS-Signale. Unterwasser erfolgt die räumliche Bestimmung mit Hilfe des bootseigenen Navigationssystems, die Rechnereinheit 13 ist hierzu mit der entsprechenden Bordelektronik datenverbunden. Ebenso erfolgt die zeitliche Zuordnung mittels des GPS-Signals, soweit dieses verfügbar ist, anderenfalls über die bordeigene Zeitmessung.

Die in der Analyseeinrichtung 12 ermittelten und in der Rechnereinheit 13 gespeicherten Daten können , sobald die im Ausfahrgerät 4 befindliche Funkantenne oberhalb der Wasseroberfläche 5 befindlich ist, an beliebige Stationen an Land übermittelt werden. Für Proben, deren Probennahme bei Tauchfahrt erfolgt ist, erfolgt die Datenübergabe per Funk paketweise, bei Probennahme über Wasser bzw. in Oberflächennähe unmittelbar nach Ermittlung der entsprechenden Daten in der Analyseeinrichtung 12.

Das Unterseeboot gemäß Fig. 1 weist darüber hinaus im Heckbereich an seiner Unterseite ein Sedimentsonar 17 (bottom profiler) sowie im vorderen Bereich ein Fächersonar (side scan sonar) 18 auf, um den Meeresboden zu untersuchen und zu vermessen. Die Sonardaten werden in der zentralen Rechnereinheit 13 verarbeitet und gespeichert. Weiterhin weist das Unterseeboot deckseitig im vorderen Bereich ein Doppler Sonar 19 auf (acoustic doppler current profiler, ADCP) mit der unterseeische Strömungen erfasst werden können. Auch diese Daten werden in der Rechnereinheit 13 verarbeitet und gespeichert. Damit ist das Unterseeboot auch in getauchtem Zustand in der Lage, sehr exakte Positionsbestimmungen durchzuführen und somit die räumliche Position der Probennahme exakt anzugeben.

Bei dem anhand von Fig. 1 dargestellten Unterseeboot sind die vorbeschriebenen Einrichtungen bereits bei der Auslegung des Bootes konstruktiv vorgesehen. Es ist jedoch auch möglich, ein vorhandenes Unterseeboot mit den vorbeschriebenen Einrichtungen, insbesondere dem vorbeschriebenen Ausfahrgerät 4, mit der Probennahmeeinrichtung, einer innerhalb des Druckkörpers 1 befindlichen Analyseeinrichtung 12 sowie einem Magazin 11 und einer Rechnereinheit 13, aufzurüsten indem eine Baueinheit 20 fabrikseitig bereitgestellt wird, welche die vorgenannten Baugrupppen weitgehend fertig zusammengestellt und verdrahtet enthält und die in eine vorhandenes Unterseeboot dadurch eingegliedert wird, dass dieses quer zu seiner Längsachse 21 im Bereich des Turmes senkrecht geschnitten und auseinander gezogen wird, bis diese Baueinheit 20 eingegliedert und schließlich mit den verbleibenden Bootshälften durch Schweißen wieder verbunden wird. In entsprechender Weise erfolgt dann der Leitungsanschluss der elektrischen und fluidführenden Leitungen im Inneren. Der besondere Vorteil besteht darin, dass auf diese Weise auch vorhandene Unterseeboote, bei denen schon aus Platzgründen eine Nachrüstung nicht möglich wäre, mit der erfindungsgemäßen Ausrüstung versehen werden können und gleichzeitig der hierfür erforderliche Bauraum geschaffen wird.

Es sei in diesem Zusammenhang darauf hingewiesen, dass insbesondere das Magazin einen erheblichen Bauraum einnehmen kann, je nach Anzahl der darin vorgesehenen Behältnisse 16. Auch die Analyseeinrichtung 12 kann insbesondere dann, wenn komplexe Analysen vorgenommen werden sollen, eine Vielzahl von Analysestationen 14 aufweisen und somit erheblichen Platzbedarf haben. Entsprechendes gilt für das Magazin 11, das, wenn es für mehrere hundert oder mehrere tausend Proben ausgelegt ist, einen erheblichen Raumbedarf benötigt. Dieser zusätzliche Raumbedarf wird durch die Baueinheit 20 gleichzeitig geschaffen.

### Bezugszeichenliste

- 1: - Druckkörper
- 2: - Oberdeck
- 3: - Turm
- 4: - Ausfahrgerät
- 5: - Wasseroberfläche
- 6: - Öffnungen
- 7: - Warn- und Analyseeinheit
- 8: - Öffnungen
- 9: - Leitung
- 10: - GPS-Antenne
- 11: - Magazin
- 12: - Analyseeinrichtung
- 13: - Rechnereinheit
- 14a - d: - Analysestationen
- 15: - Spülleitungen
- 16a - c: - Behältnisse
- 17: - Sedimentsonar
- 18: - Fächersonar
- 19: - Dopplersonar
- 20: - Baueinheit
- 21: - Längsachse

## Patentansprüche

1. Unterseeboot mit einer Einrichtung zur Probennahme (8, 9) von Wasser und/oder Luft.

2. Unterseeboot nach Anspruch 1, bei dem die Einrichtung zur Probennahme (8, 9) an einem Ausfahrgerät (4) angeordnet ist.

3. Unterseeboot nach einem der vorhergehenden Ansprüche, bei dem ein Magazin (11) zur Aufbewahrung und Lagerung der Proben vorgesehen ist.

4. Unterseeboot nach einem der vorhergehenden Ansprüche, bei dem eine Analyseeinrichtung (12) für die Proben vorgesehen ist.

5. Unterseeboot nach einem der vorhergehenden Ansprüche, bei dem das Magazin (11) und die Analyseeinrichtung (12) der Probennahmeeinrichtung (8, 9) parallel nachgeordnet sind.

6. Unterseeboot nach einem der vorhergehenden Ansprüche, bei dem das Magazin (11) und/ oder die Analyseeinrichtung (12) außerhalb des Druckkörpers (1), vorzugsweise im Bereich des Oberdecks (2) oder des Turmes (4) vorgesehen ist.

7. Unterseeboot nach einem der vorhergehenden Ansprüche, bei dem eine Spüleinrichtung (15) vorgesehen ist, welche den Leitungsweg (9) von der Entnahmestelle bis zum Magazin (11) und/oder bis zur Analyseeinrichtung (12) mit dem Probenfluid vorspült.

8. Unterseeboot nach einem der vorhergehenden Ansprüche, bei dem eine Analyseeinrichtung (12) und/oder ein Magazin (11) zur Probenlagerung innerhalb des Druckkörpers (1) angeordnet sind.

9. Unterseeboot nach einem der vorhergehenden Ansprüche, bei dem Mittel zur Orts- und Zeitbestimmung (10) und eine Rechnereinheit (13) zur örtlichen und zeitlichen Zuordnung und Speicherung von Analysedaten und/oder Probendaten vorgesehen sind.

10. Unterseeboot nach einem der vorhergehenden Ansprüche, bei dem eine Einrichtung zur drahtlosen Übermittlung von Analysedaten sowie deren zeitliche und räumliche Zuordnung vorgesehen ist, wobei eine Sendeantenne vorzugsweise an einem Ausfahrgerät (4) angeordnet ist.

11. Unterseeboot nach einem der vorhergehenden Ansprüche, bei dem eine tauchdruckfeste Schleuse vorgesehen ist, über die auch in getauchtem Zustand Proben in den Druckkörper (1) verbracht werden können.

12. Unterseeboot nach einem der vorhergehenden Ansprüche, bei dem mindestens das Ausfahrgerät (4) mit der Einrichtung zur Probennahme (8, 9), vorzugsweise auch das Magazin (11) und/oder die Analyseeinrichtung (12) Teil einer Baueinheit (20) sind, welche nach Durchtrennen des Unterseeboots eingliederbar ist.
